# EUROPEAN PATENT APPLICATION

(11) **EP 0 682 278 A1**
(43) Date of publication of application: **15.11.1995**
(21) Application number: 94303453.8
(22) Date of filing: 13.05.1994
(51) Int. Cl.: G02B 6/34, H04J 14/02, G02B 5/20

(54) **Optical filter**

(71) Applicant: BRITISH TELECOMMUNICATIONS public limited company, London EC1A 7AJ (GB)
(72) Inventor: Blyth, Kevin John, Harleston, Norfolk, IP20 9DU (GB); Hill, Alan Michael, Grundisburgh, Woodbridge, Suffolk IP13 (GB)
(74) Representative: Roberts, Simon Christopher

(57) **Abstract**

A tunable optical filter includes an input optical fibre 1 with a multichannel optical WDM signal that is subject to a wavelength dispersion by a diffraction grating 5 to achieve a coarse wavelength selection. The grating 5 is rotated by a motor 7 so that the selected wavelength is reflected back to an output waveguide 2. Fine wavelength selection is achieved by means of a liquid crystal Fabry-Perot etalon 6, which is tunable by applied voltage from microprocessor 8. The light passes through the etalon 6 twice, which improves wavelength descrimination.

## Description

This invention relates to an optical filter and has particular but not exclusive application to channel selection in an optical network.

In our copending application PCT/GB91/00264, there is described a tunable optical filter in which a pair of input and output optical waveguides arranged in parallel, are positioned in front of a lens and a diffraction grating. By changing the relative disposition of the grating and the fibres, input optical radiation from one of the fibres can be subject to a wavelength dispersion by means of the grating so that an individual wavelength range can be directed into the output fibre. An arrangement is described which can discriminate between channels of 1nm spacing. If it is desired to achieve greater resolution, for example 0.1nm (1Å) the arrangement described in the prior PCT Application suffers from the disadvantage that the path length between the optical fibres and the diffraction grating needs to be of the order of ½ metre to allow the diffraction grating to provide sufficiently large dispersion. Also, the surface area of the diffraction grating needs to be increased, making the apparatus bulky and inconvenient for practical use.

An alternative proposal is described in "Tunable Wavelength-Selective Liquid Crystal Filters for 600-Channel FDM System" Hirabayashi et al IEEE Photonics Technology Letters Volume 4 No. 6 June 1992 pp 597-599. This arrangement makes use of first and second liquid crystal Fabry-Perot filters (LCFP). Each LCFP comprises a Fabry-Perot etalon including liquid crystal material disposed between parallel semi-reflective surfaces, to which a voltage is applied that controls its refractive index, so as to alter the effective path length within the etalon and hence the resonant wavelength. The LCFP is brought into resonance at a particular wavelength by selecting the applied voltage. As is well known in the art, a Fabry-Perot etalon produces a series of resonant peaks at regularly spaced wavelengths, the spacing being a function of the geometry of the device. By increasing the spacing between the semi-reflective surfaces of the device, the spacing (FSR) between adjacent resonant peaks is reduced and the peaks have a resulting narrower bandwidth. Conversely, if the spacing between the semi-reflective surfaces is reduced, the bandwidth and the spacing between the resonant peaks increases.

In the device proposed by Hirabayashi et al *supra*, the first LCFP produces resonant peaks with a relatively large bandwidth to produce a coarse wavelength selection, and the second LCFP produces resonant peaks that are narrower in order to provide a fine wavelength selection. However, in practice, the device of Hirabayashi is difficult to construct and requires accurate alignment of its component optical surfaces.

The present invention provides an alternative solution. In accordance with the present invention there is provided an optical filter comprising an input optical waveguide, an output device to receive optical radiation from the input waveguide, optical dispersion means for producing a wavelength dispersion of optical radiation from the input waveguide, for selectively directing a given wavelength thereof to the output device, and filtering means configured to pass selectively optical radiation of the given wavelength travelling to the output device.

The optical dispersion means conveniently comprises a diffraction grating which may be rotatable in order to select the given wavelength. This provides a convenient way of making a coarse wavelength adjustment. The filtering means may be constituted by a LCFP in order to provide fine wavelength adjustment.

The invention also includes a method of selectively filtering optical signals, comprising producing a coarse wavelength selection by producing a spatial wavelength dispersion of the optical signals, and selectively directing a given wavelength component thereof to an output device; and producing a fine wavelength selection by means of a tunable filter configuration to pass selectively optical radiation of said given wavelength travelling to the output device.

In order that the invention may be more fully understood an embodiment thereof will now be described by way of example with reference to the accompanying drawings, in which:
Figure 1 is a schematic block diagram of an example of a tunable optical filter in accordance with the invention;
Figure 2 is a sectional view of the optical waveguide shown in Figure 1;
Figure 3 is a graph illustrating the wavelength response of the diffraction grating and LCFP shown in Figure 1; and
Figure 4 is a schematic cross-section of the LCFP shown in Figure 1.

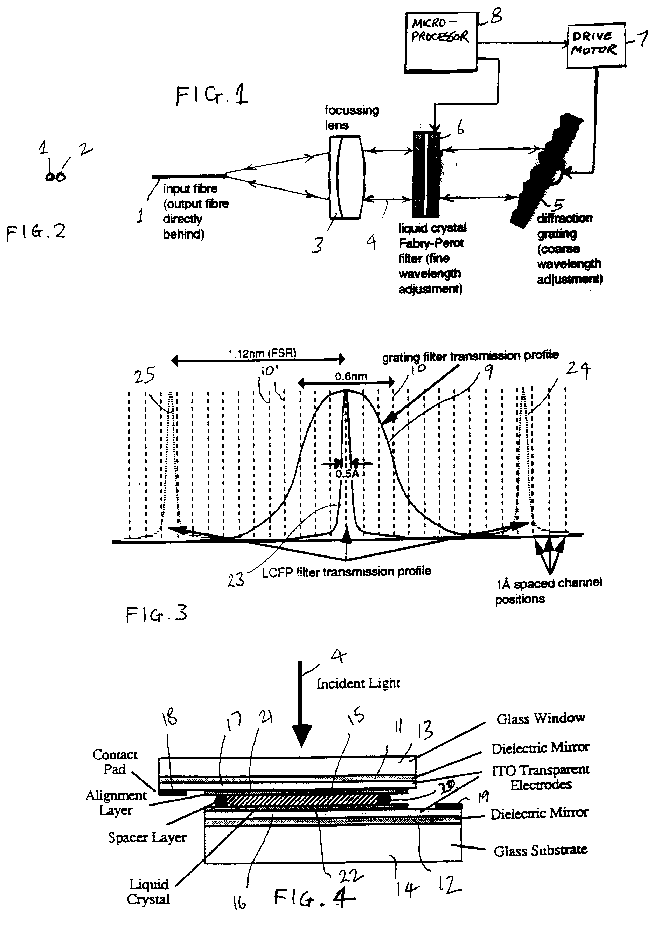

Referring to Figures 1 and 2, the tunable optical filter consists of an input optical fibre 1 that typically feeds wavelength division multiplexed (WDM) signals in channels with 0.1 nm wavelength spacings. The device shown in Figure 1 enables individual channels to be selected and fed to an output optical fibre 2 typically arranged in parallel with the input fibre 1. Light from the fibre 1 is fed through a collimating lens doublet 3 to form a parallel beam 4 which is directed to a rotatable diffraction grating 5 that provides coarse wavelength adjustment, the beam 4 also passing through a LCFP 6 which produces a fine wavelength selection. Thus, the light passes through the LCFP 6 twice, firstly on its passage from the input fibre 1 to the diffraction grating 5, and then upon its return from the grating to the output fibre 2. Considering now in more detail the coarse wavelength selection produced by the diffraction grating 5, it is rotated by means of a drive motor 7 under the control of a microprocessor 8. The diffraction grating 5 produces a spatial dispersion of the wavelength components of the multichannel input optical signals. By rotating the grating, individual wavelengths can be directed towards the output fibre 2.

As shown in Figure 3, the grating 5 has a relatively broad bandwidth transmission profile 9. The 0.1 nm (1Å) spaced channel positions are shown as dotted lines 10 and it will be seen that the transmission profile 9 of the grating 5 is sufficiently broad to include a plurality of the transmission channels so that, the grating is not capable of resolving the individual channels by itself, unless spaced an unacceptably large distance from the input fibre.

In order to overcome this difficulty, fine wavelength selection is achieved by means of the LCFP 6. The structure of the device 6 will now be described in more detail with reference to Figure 4. The device consists of a resonant Fabry-Perot etalon, in which a resonant cavity is defined between first and second semi-reflective dielectric mirrors 11, 12 formed on glass substrates 13, 14. The space between the mirrors is filled with liquid crystal material 15, which varies its refractive index in response to an applied electric field. To this end, transparent electrodes 16, 17 overlie the dielectric mirrors 11, 12 and contact pads 18, 19 are provided to allow a voltage to be applied across the liquid crystal material 15 through the electrodes. A spacer ring 20 confines the liquid crystal material between the glass windows, and spacer layers 21, 22 are also provided overlying the electrodes 17, 18. The LCFP filter 6 should be placed at a small angle, of the order of 0.03°, to the optical axis of the device. This prevents reflections from the LCFP filter 6 entering the output fibre 2 and removes modulation effects caused by multiple reflections between the grating 5 and the LCFP filter 6.

Incident light 4 on the device can only pass through at wavelengths that achieve resonance between the dielectric mirrors, which is a function of the refractive index of the liquid crystal material. Thus, by selecting the voltage applied to the contacts 18, 19, the refractive index can be controlled and hence the device can be used as a tunable filter. The wavelength characteristic 23 of the LCFP is shown in Figure 3 and consists of a sharply defined resonant peak typically, with a FWHM of 0.5Å lying within the pass band 9 of the grating filter 5. The LCFP filter transmission profile also includes spaced resonant peaks 24, 25 shown in dotted outline, at which the filter cavity also exhibits resonance. However, since the peaks 24, 25 lie outside of the pass band of the diffraction grating, light at these wavelengths does not pass to the output fibre 2. Thus, the combined effect of the coarse filtering from the grating 5 and the fine filtering from the tunable filter 6, is to select individual wavelength channels and a channel resolution of 0.1nm can readily be achieved.

The voltage applied to the LCFP 6 is controlled by the microprocessor 8, typically by reference to a look-up table which is stored in a memory associated with the microprocessor 8. Alternatively, an algorithm may be used to compute the desired voltage to achieve channel selection.

With the described embodiment calculations show that the FWHM bandwidth of the LCFP filter 6 working in double pass mode as shown in Figure 1, should be of the order of 0.52Å to provide a -17dB total cross-talk from all the channels, taking into account wavelength errors. It can be shown that in this situation, the LCFP filter 6 needs to exhibit a finesse (for a single pass) of ^{∼}14. The finesse and bandwidth necessary for the LCFP filter 6 in this configuration are readily achievable, unlike the configurations of the prior art discussed hereinbefore.

Many modifications and variations of the described filter are possible. For example whilst the diffraction grating shown in Figure 1 operates in a reflective mode it will be possible to use a transmissive diffraction grating, with the output fibre 2 arranged coaxial with fibre 1. However, the reflective mode of operation shown in Figure 1 has the advantage that the beam 4 passes twice through the LCFP filter 6, which results in a narrower resonant peak and hence sharper wavelength resolution.

The described filter may be polarisation dependent, due to both the grating 5 and to a greater extent the LCFP filter 6. This problem may be reduced by additional optics (not shown) which splits the light beam into two orthogonal polarisation, which rotates one of the polarisations so that the two beams have the same polarisation at the filter 6. The beam splitting may be achieved, for example, by means of a polarising beam splitter or a calcite crystal. In both cases a λ/2 plate can be used to rotate the polarization of one of the beams from the beam splitter by 90°. This results in two separate beams having the same polarization being applied to the filter 6. The same combination of λ/2 plate and beam splitter can be used to recombine the returning, diffracted light into a single output beam.

An alternative solution is to make the LCFP filter 6 itself polarisation insensitive by using twisted liquid crystal structures or, by means of intra-cavity λ/4 plates.

Also, the output need not necessarily be fed to an optical fibre 2. Instead, the output device may comprise an optical sensor to produce an electrical output.

Also, it is possible to use different types of tunable filter, instead of the LCFP filter 6. For example, silicon micromachined Fabry-Perot etalons can be used and a suitable device is described in "Application of Miniature Micromachined Fabry-Perot Interferometer to Optical Fibre WDM System" J. S. Harper et al Electronic Letters 3 August 1989, Volume 25, No. 16 p. 1065 and "Miniature Micromachined Fabry-Perot Interferometers in Silicon" S. R. Malinson et al Electronic Letters 24 September 1987 Volume 23, No. 20 pp. 1041-1043.

Furthermore, whilst the described example uses parallel input and output fibres 1, 2 in a fixed location, it is also possible to move the fibres collectively, in a direction transverse to the optical axis in order to achieve the coarse wavelength selection, instead of rotating the diffraction grating 5. Also, additional fibre groups can be included in the manner described in our co-pending application PCT/GB91/00264. Thus, the fibres can be used in an amplifier loop, which can be wavelength locked to input channel signals. Reference is directed to the PCT Application for further details.

As used herein, the term "optical radiation" includes both visible and non-visible radiation, including ultraviolet and infra-red radiation as well as visible light.

## Claims

1. An optical filter comprising:
an input optical waveguide (1);
an output device (2) to receive optical radiation from the input waveguide;
optical dispersion means (5, 7) for producing a wavelength dispersion of optical radiation from the input waveguide, for selectively directing a given wavelength thereof to the output device; and
filtering means (6) configured to pass selectively optical radiation of said given wavelength travelling to the output device.

2. A filter according to claim 1 wherein the optical radiation (4) passes through the filtering means when travelling from the input waveguide to the dispersion means, and again when travelling from the dispersion means to the output device.

3. A filter according to claim 1 or 2 wherein the filtering means (6) is selectively tunable.

4. A filter according to claim 3 wherein the filtering means is electrically tunable.

5. A filter according to claim 4 wherein the filtering means comprises a liquid crystal Fabry-Perot device (6).

6. A filter according to any preceding claim wherein the dispersion means comprises a diffraction grating (5).

7. A filter according to claim 6 including means (7) for selectively altering the angular disposition of the grating for selectively directing a given wavelength of the dispersion to the output device.

8. A filter according to claim 6 including means for moving the output device relative to the dispersion device for selecting the given wavelength therefrom.

9. A filter according to claim 8 including means for moving the input waveguide and the output device collectively to select the given wavelength.

10. A filter according to any one of claims 6 to 9 wherein the grating (5) is a reflection grating.

11. A filter according to any preceding claim wherein the output device comprises an output optical waveguide (2).

12. A method of selectively filtering optical signals, comprising producing a coarse wavelength selection by producing a spatial wavelength dispersion of the optical signals, and selectively directing a given wavelength component thereof to an output device; and producing a fine wavelength selection by means of a tunable filter configuration to pass selectively optical radiation of said given wavelength travelling to the output device.

13. A method according to claim 12 wherein the optical signals comprise WDM signals, an individual channels thereof are selectively directed to the output device.

14. A method according to claim 13 wherein the wavelength spacing between the channels is 0.1 nm or less.
